# EUROPÄISCHE PATENTSCHRIFT

(11) **EP 2 282 154 B1**
(45) Veröffentlichungstag und Bekanntmachung des Hinweises auf die Patenterteilung: **02.11.2016**
(21) Anmeldenummer: 10167505.6
(22) Anmeldetag: 28.06.2010
(51) Int. Cl.: F28D 20/02, F28D 9/00, F28D 9/04, F01N 5/02, F01N 3/08, F01N 3/10, F01N 3/28

(54) **Latentwärmespeicher für Abgasanlage**
Latent heat accumulator for exhaust gas system
Accumulateur thermique à chaleur latente pour une installation d'échappement

(30) Priorität: 24.07.2009 DE 102009034655
(43) Veröffentlichungstag der Anmeldung: 09.02.2011
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: BRP Renaud & Partner mbB Rechtsanwälte Patentanwälte Steuerberater

(56) Entgegenhaltungen:
- EP-A1- 0 596 854
- WO-A2-2008/050210
- CH-A5- 666 118
- DE-A1- 10 329 153
- DE-A1-102004 052 106
- FR-A1- 2 081 113

## Beschreibung

Die vorliegende Erfindung betrifft einen Latentwärmespeicher für eine Abgasanlage einer Brennkraftmaschine, insbesondere eines Kraftfahrzeugs, mit den Merkmalen des Oberbegriffs des Anspruchs 1.

Ein Latentwärmespeicher charakterisiert sich insbesondere durch die Verwendung eines Phasenwechselmaterials zur Wärmespeicherung. Ein derartiges Phasenwechselmaterial, bei dem es sich üblicherweise um Salze handelt, führt bei der jeweils gewünschten Speichertemperatur einen Phasenwechsel zwischen flüssiger Phase und fester Phase durch. Beim Aufladen des Latentwärmespeichers schmilzt das Wärmespeichermaterial, während es bei der Entladung erstarrt. Unterhalb der Speichertemperatur, also unterhalb der Phasenwechseltemperatur des Phasenwechselmaterials kann der damit gebildete Latentwärmespeicher nur sensible Wärme speichern, also in Form einer Temperaturerhöhung des festen Phasenwechselmaterials. Wenn das Phasenwechselmaterial bis auf seine Phasenwechseltemperatur aufgeheizt ist, schmilzt es, was zu einer latenten Wärmespeicherung durch den Phasenwechsel führt. Die so gespeicherte Wärme wird dabei auf dem Temperaturniveau der Speichertemperatur gespeichert und kann auch bei dieser Temperatur abgerufen werden. Darüber hinaus kann auch das flüssige Phasenwechselmaterial zusätzlich erwärmt werden, was wieder zu einer sensiblen, also temperaturabhängigen Wärmespeicherung führt. Durch Auswahl des Phasenwechselmaterials kann die Speichertemperatur des Latentwärmespeichers auf den jeweiligen Einsatzzweck des Latentwärmespeichers adaptiert werden.

Insbesondere bei Fahrzeuganwendungen können Latentwärmespeicher dazu verwendet werden, die Brennkraftmaschine oder einzelne Komponenten einer Abgasanlage möglichst lange auf Betriebstemperatur zu halten, um die Effizienz der jeweiligen Komponente bzw. der Brennkraftmaschine zu steigern. Da ein zunehmendes Interesse an derartigen Latentwärmespeichern besteht, werden Lösungen für eine kostengünstige Fertigung gesucht, die sich insbesondere für eine Serieproduktion eignen.

Aus der DE 10 2004 052 106 A1 ist ein Latentwärmespeicher für eine Abgasanlage einer Brennkraftmaschine, insbesondere eines Kraftfahrzeugs, bekannt, der einen Speicherkörper besitzt, der mehrere parallel zueinander verlaufenden Kanäle aufweist, von denen zumindest einige ein Phasenwechselmaterial enthalten, wobei der Speicherkörper durch eine Schichtstruktur mit mindestens zwei Blechen gebildet ist, von denen zumindest eines gewellt ist und die aneinander anliegen, derart, dass die Wellen des wenigstens einen Blechs die Kanäle bilden, wobei die beiden Bleche entlang von Kontaktlinien aneinander anliegen.

Die vorliegende Erfindung beschäftigt sich mit dem Problem, für einen Latentwärmespeicher der eingangs genannten Art eine verbesserte Ausführungsform anzugeben, die sich insbesondere dadurch auszeichnet, dass sie vergleichsweise preiswert herstellbar ist und eine reduzierte thermische Belastung aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Speicherkörper des Latentwärmespeichers durch eine Schichtstruktur zu bilden, die mit Hilfe mehrerer Bleche hergestellt wird. Zumindest eines dieser Bleche ist gewellt. Die Bleche liegen aneinander an und sind aneinander befestigt. Hierdurch bilden die Wellen des wenigstens einen Blechs Kanäle innerhalb des Speicherkörpers aus, die parallel zueinander verlaufen und von denen zumindest einige mit einem Phasenwechselmaterial befüllt sein können. Eine derartige Schichtstruktur aus Blechen kann besonders einfach und preiswert hergestellt werden. Insbesondere eignet sie sich auch für eine Serienherstellung.

Die beiden Bleche liegen entlang von Kontaktlinien aneinander an und sind entlang solcher Kontaktlinien aneinander befestigt, bspw. mittels Schweißnähten oder Lötverbindungen. Um thermisch bedingte Spannungen innerhalb des Speicherkörpers zu reduzieren, liegen die beiden Bleche erfindungsgemäß entlang einiger solcher Kontaktlinien lose aneinander an. Im Bereich dieser lose aneinander anliegenden Kontaktlinien können somit Relativbewegungen zwischen den beiden Blechen auftreten, was den Aufbau thermisch bedingter Spannungen innerhalb des Speicherkörpers reduziert.

Zusätzlich oder alternativ ist es möglich, beide Bleche gewellt auszugestalten. Quer zur Längsrichtung der Wellen besitzen die Bleche dadurch eine gewisse Biegeelastizität, die es ermöglicht, thermische Spannungen auszugleichen bzw. aufzunehmen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage im Bereich eines Latentwärmespeichers,
- Fig. 2 bis 12: Schnittansichten durch einen Teil eines Speicherkörpers des Latentwärmespeichers bei verschiedenen Ausführungsformen.

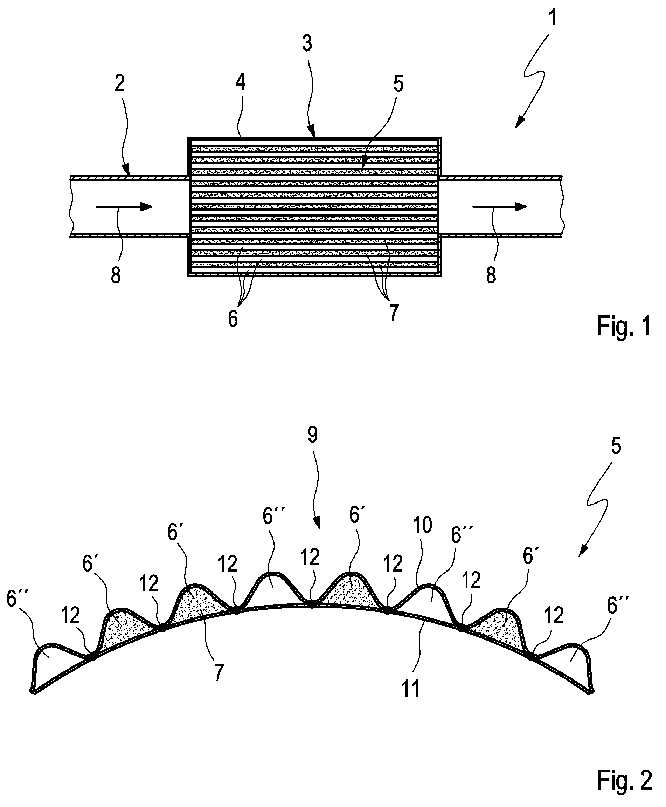

Entsprechend Fig. 1 umfasst eine Abgasanlage 1 einer im Übrigen nicht dargestellten Brennkraftmaschine, die insbesondere in einem Kraftfahrzeug angeordnet sein kann, eine Abgasleitung 2, in der ein Latentwärmespeicher 3 angeordnet bzw. eingebunden ist. Der Latentwärmespeicher 3 enthält in einem Gehäuse 4 einen Speicherkörper 5, der mehrere Kanäle 6 enthält, die parallel zueinander verlaufen und die ein Phasenwechselmaterial 7 enthalten. Dabei müssen nicht alle Kanäle 6 mit dem Phasenwechselmaterial 7 befüllt sein. Insbesondere ist es möglich, einige der Kanäle 6 so in die Abgasleitung 2 einzubinden, dass sie von einer in der Abgasleitung 2 transportierten Abgasströmung 8 durchströmbar sind. Die mit Phasenwechselmaterial 7 befüllten Kanäle 6 werden in den Schnittdarstellungen der Fig. 2 bis 12 mit 6' bezeichnet, während die nicht mit dem Phasenwechselmaterial 7 befüllten Kanäle 6, die insbesondere vom Abgas durchströmt sein können, in den Fig. 2 bis 12 mit 6" bezeichnet werden.

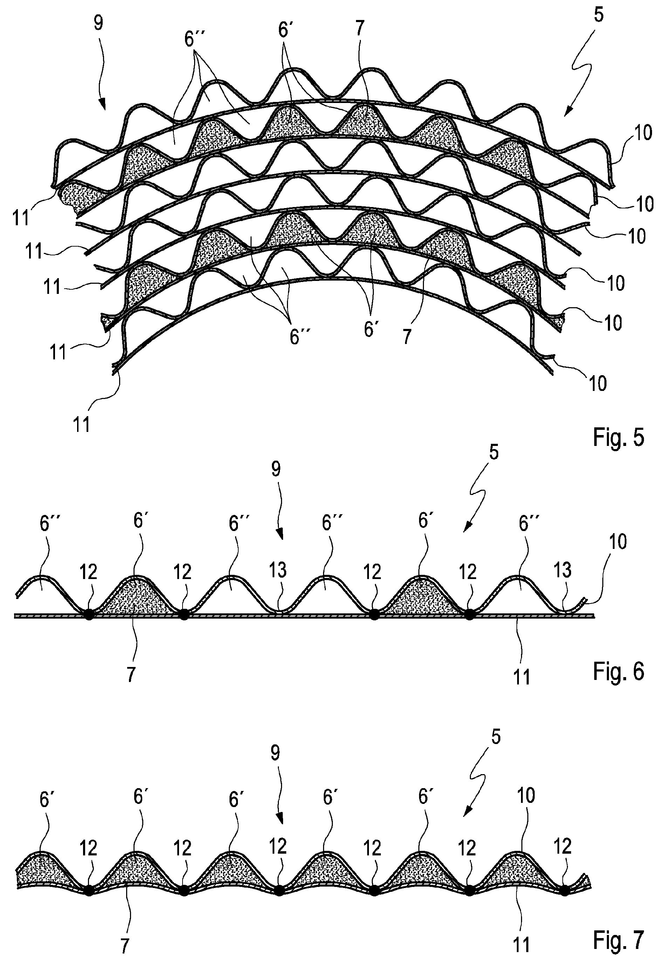

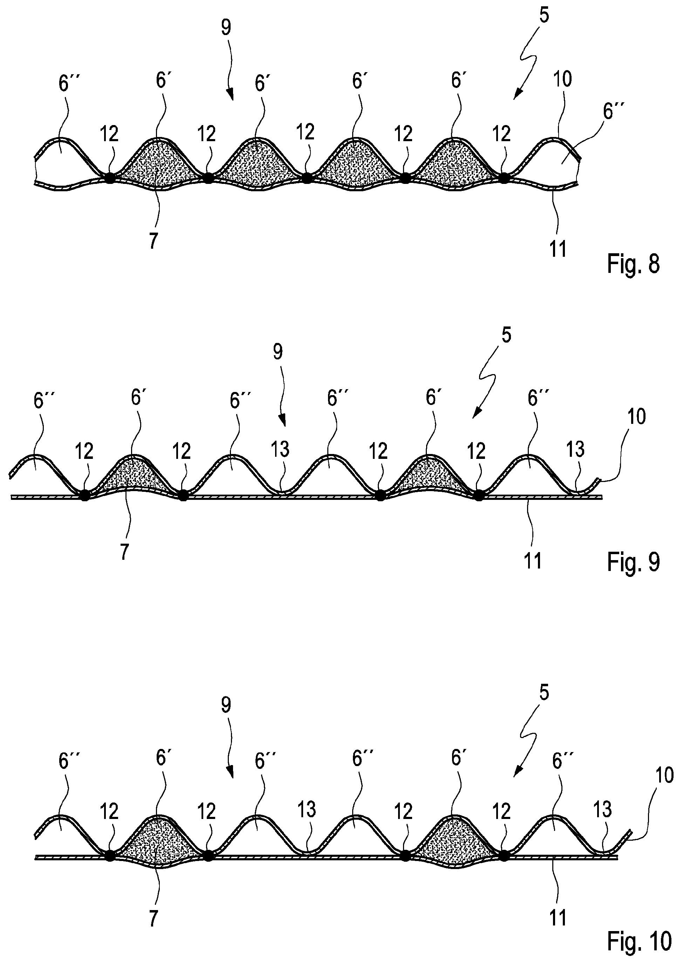

Entsprechend den Fig. 2 bis 12 wird beim hier vorgestellten Latentwärmespeicher 3 der Speicherkörper 5 durch eine Schichtstruktur 9 gebildet, welche die Kanäle 6 enthält und die in den Darstellungen der Fig. 2 bis 12 quer zur Längsrichtung der Kanäle 6 geschnitten ist und nur teilweise dargestellt ist. Die Schichtstruktur 9 ist dabei mit wenigstens zwei Blechen 10, 11 gebildet von denen zumindest das eine Blech 10 gewellt ist, während das andere Blech 11 in den Ausführungsformen der Fig. 2 bis 6 ungewellt oder glatt und insbesondere eben ausgestaltet ist. Bei den Ausführungsformen der Fig. 7, 8, 11 und 12 ist auch das andere Blech 11 gewellt ausgeführt. Bei den Ausführungsformen der Fig. 9 und 10 ist das andere Blech 11 teilweise gewellt und teilweise ungewellt bzw. flach und insbesondere eben ausgestaltet.

Zur Herstellung der Schichtstruktur 9 sind die beiden Bleche 10, 11 schichtförmig aufeinander gelegt und aneinander befestigt. Dabei bilden die Wellen des wenigstens einen Blechs 10 gemeinsam mit dem anderen Blech 11 die Kanäle 6. Je nach Betrachtungsweise liegt das gewellte Blech 10 im Bereich seiner dem jeweils anderen Blech 11 zugewandten Scheitellinien der Wellenberge bzw. Wellentäler am anderen Blech 11 an. Die Kontaktierung erfolgt dadurch linienförmig. Bei geradlinigen Wellenstrukturen sind auch diese Kontaktlinien geradlinig. Entlang solcher Kontaktlinien sind die beiden Bleche 10, 11 bevorzugt aneinander befestigt. Entsprechende Befestigungsstellen sind in den Fig. 2 und 6 bis 12 durch Verdickungen symbolisiert und mit 12 bezeichnet. Die Befestigungsstellen 12 können z. Bsp. durch Schweißnähte oder durch Lötverbindungen realisiert sein.

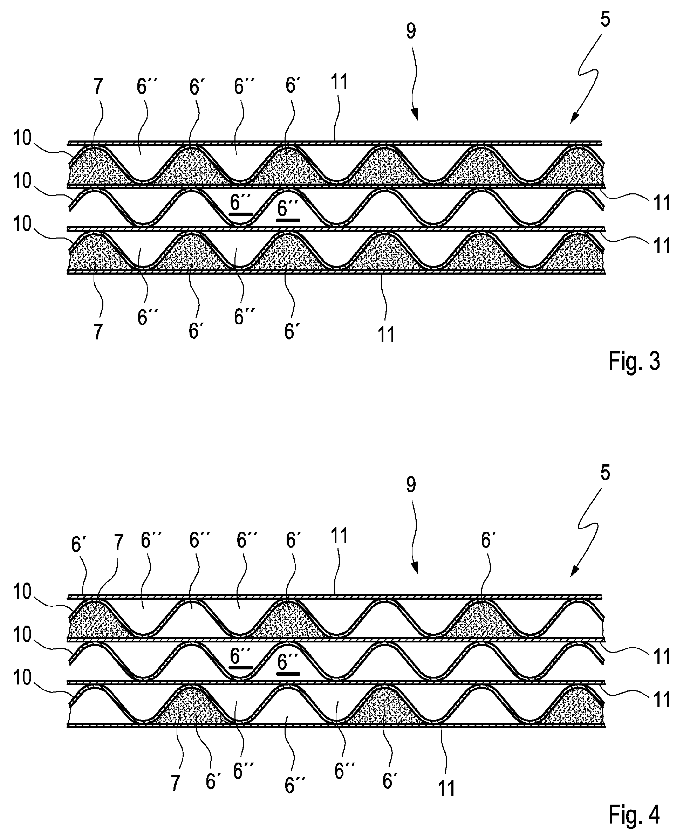

Zum Herstellen der Schichtstruktur 9 können die Bleche 10, 11 bspw. spiralförmig gewickelt werden, was in den gekrümmten Darstellungen der Fig. 2 und 5 angedeutet ist. Ebenso ist es möglich, die beiden Bleche 10, 11 paarweise in ebenen Lagen aufeinander zu schichten bzw. zu stapeln, was in den Fig. 3, 4 und 6 bis 12 angedeutet ist. Beide Herstellungsverfahren sind vergleichsweise einfach realisierbar und eignen sich insbesondere für eine Serienproduktion.

Die Fig. 6, 9 und 10 zeigen erfindungsgemäße Ausführungsformen bei denen die beiden Bleche 10, 11 nur entlang von solchen Kontaktlinien aneinander befestigt sind, die sich beiderseits von befüllten Kanälen 6' befinden. Im Bereich der übrigen Kontaktlinien liegen die beiden Bleche 10, 11 lose aneinander an. Derartige lose Anlagestellen sind in den Fig. 6, 9 und 10 mit 13 bezeichnet. Eine solche Konfiguration ermöglicht Relativbewegungen zwischen den beiden Blechen 10, 11. Relativbewegungen dieser Art können bspw. aufgrund thermischer Dehnungseffekte auftreten und reduzieren thermisch bedingte Spannungen innerhalb der Schichtstruktur 9.

Die mit dem Phasenwechselmaterial 7 befüllten Kanäle 6' sind seitlich durch die Befestigungsstellen 12 verschlossen, die hierzu durchgehend ausgestaltet sind. An ihren Längsenden sind diese befüllten Kanäle 6' ebenfalls auf geeignete Weise verschlossen. Durch das endseitige Verschließen der befüllten Kanäle 6' wird das Phasenwechselmaterial 7 innerhalb dieser Kanäle 6' nach außen gekapselt, so dass es auch im flüssigen Zustand innerhalb der dafür vorgesehenen abgeschlossenen Kanäle 6' verbleibt. Die für die Gasführung vorgesehenen Kanäle 6' sind endseitig offen. Durch die Anzahl befüllter Kanäle 6' und unbefüllter Kanäle 6" sowie durch deren räumliche Anordnung innerhalb der Schichtstruktur 9 kann die Wärmespeicherkapazität des Latentwärmespeichers 3 sowie die Wärmeübertragung innerhalb des Latentwärmespeichers 3 beeinflusst werden. Die Fig. 3 bis 5 zeigen rein exemplarisch unterschiedliche Konfigurationen, die zu unterschiedlichen Speicherleistungen und Wärmeübertragungsleistungen führen. Ferner kann die Anzahl der durchströmbaren Kanäle 6" durch den maximal in der Abgasanlage 1 auftretenden Abgasstrom 8 bzw. durch den zulässigen Durchströmungswiderstand vorgegeben sein, wodurch die Auslegung der Schichtstruktur 9 mitbestimmt ist.

Die durchströmbaren Kanäle 6" können zumindest teilweise katalytisch aktiv beschichtet sein, wodurch es möglich ist, in den Latentwärmespeicher 3 einen Katalysator zu integrieren. Die Wärmespeicherung und die Wärmeabgabe innerhalb des Latentwärmespeichers 3 kann dadurch unmittelbar dort erfolgen, wo die Wärme gegebenenfalls benötigt wird bzw. zum Aufladen des Wärmespeichers 3 bereitgestellt wird. Hierdurch arbeitet der Latentwärmespeicher 3 besonders effizient.

Hierzu kann das Phasenwechselmaterial 7 so ausgewählt werden, dass seine Phasenwechseltemperatur bei bzw. oberhalb einer Anspringtemperatur des jeweiligen Katalysatormaterials liegt. Hierdurch kann für den jeweiligen Katalysator eine Stand-by-Funktion realisiert werden, da mit Hilfe des Phasenwechselmaterials 7 der Katalysator relativ lange auf dem Temperaturniveau der Phasenwechseltemperatur gehalten werden kann. Katalytische Beschichtungen, die sich zur Realisierung einer derartigen Stand-by-Funktion eignen, sind bspw. TWC (Three Way Catalyst, Drei-Wege-Katalysator) oder DOC (Diesel Oxidation Catalyst, Diesel Oxy-Katalysator). Alternativ (oder bei Verwendung von zwei verschiedenen Phasenwechselmaterialien zusätzlich) ist es möglich, das Phasenwechselmaterial so auszuwählen, dass sich seine Phasenwechseltemperatur am oberen Ende eines zulässigen Betriebstemperaturfensters des jeweiligen Katalysators befindet. Hierdurch kann eine Überhitzung des jeweiligen Katalysators vermieden werden. Nimmt die Temperatur des Katalysators stark zu und erreicht die obere Temperaturgrenze seines Betriebstemperaturfensters, wird die Phasenwechseltemperatur erreicht und das Phasenwechselmaterial 7 schmilzt und nimmt dabei Wärme auf. Während dieser latenten Wärmeaufnahme wird eine Temperaturerhöhung im Katalysator stark reduziert, wodurch dieser vor einer Überhitzung geschützt werden kann. Katalytische Beschichtungen, die sich für eine derartige Funktion eignen, sind insbesondere NSK (NOX Storage Catalyst, NOX-Speicher-Katalysator) und POC (Particle Oxidation Catalyst, Partikel-Oxy-Katalysator). Wie vorstehend angedeutet, kann der Latentwärmespeicher 3 einer besonderen Ausführungsform beide vorbeschriebenen Funktionalitäten realisieren, wenn zwei verschiedene Phasenwechselmaterialien 7 in getrennten Kanälen 6 verwendet werden, die sich durch unterschiedliche Phasenwechseltemperaturen voneinander unterscheiden.

Die Ausführungsformen der Fig. 7 bis 12 zeigen Schichtstrukturen 9, bei denen beide Bleche 10, 11 Wellen aufweisen. Dabei besitzen die Wellenstrukturen beider Bleche 10, 11 bevorzugt gleiche Wellenlängen. Das heißt, der Abstand quer zur Wellenlängsrichtung zwischen zwei unmittelbar benachbarten Scheiteln ist bei beiden Blechen 10, 11 etwa gleich groß. Ferner können die Wellenstrukturen der beiden Bleche 10, 11 entsprechend den hier gezeigten Ausführungsformen unterschiedliche Amplituden aufweisen. Erkennbar zeigt das in den Fig. 7 bis 12 oben dargestellte erste Blech 10 größere Amplituden, also größere Abstände zwischen Wellental und Wellenberg, als das untere oder zweite Blech 11. Beispielsweise sind die Amplituden des einen Blechs 10 zweibis zehnmal größer als die Amplituden des anderen Blechs 11.

Sofern beide Bleche 10, 11 Wellen aufweisen, können thermisch bedingte Dehnungseffekte innerhalb der Schichtstruktur 9 besser aufgenommen bzw. kompensiert werden.

Die Fig. 7, 9 und 11 zeigen Ausführungsformen, bei denen die Bleche 10, 11 hinsichtlich ihrer Wellenstrukturen gleichphasig aneinander anliegen. Dass heißt, die Wellentäler des einen Blechs 10 kontaktieren das andere Blech 11 ebenfalls im Bereich von Wellentälern. Eine derartige Konfiguration kann auch als bi-konkave Wellenpaarung bezeichnet werden. Im Unterschied dazu zeigen die Fig. 8, 10 und 12 Konfigurationen, bei denen die Bleche 10, 11 hinsichtlich ihrer Wellenstrukturen phasenverschoben aneinander anliegen. Im Beispiel beträgt die Phasenverschiebung eine halbe Wellenlänge. Dies zeigt sich darin, dass die Wellentäler des einen Blechs 10 am anderen Blech 11 im Bereich von dessen Wellenbergen anliegen. Eine derartige Konfiguration kann auch als konkav-konvexe Wellenpaarung bezeichnet werden. Es ist klar, dass auch andere Phasenverschiebungen möglich sind, die größer oder kleiner als eine halbe Wellenlänge sind.

Die Fig. 9 und 10 zeigen spezielle Ausführungsformen, bei denen zwischen zwei benachbarten befüllten Kanälen 6' zumindest ein unbefüllter Kanal 6" angeordnet ist, wobei außerdem vorgesehen ist, das zweite Blech 11 nur im Bereich der befüllten Kanäle 6' mit einer entsprechenden Welle auszustatten. Im Bereich der unbefüllten Kanäle 6" ist das zweite Blech 11 bei diesen Ausführungsformen ungewellt bzw. glatt und insbesondere eben ausgestaltet. Die in Fig. 9 gezeigte Konfiguration kann als selektive bi-konkave Wellenpaarung bezeichnet werden, während die in Fig. 10 gezeigte Konfiguration als selektive konkav-konvexe Wellenpaarung bezeichnet werden kann.

Diese Konfigurationen zeichnen sich dadurch aus, dass für den Fall, dass mehrere unbefüllte Kanäle 6" innerhalb der Speicherstruktur 5 zueinander benachbart sind, eine höhere Beweglichkeit zum Ausgleich von thermischen Dehnungseffekten gegeben ist.

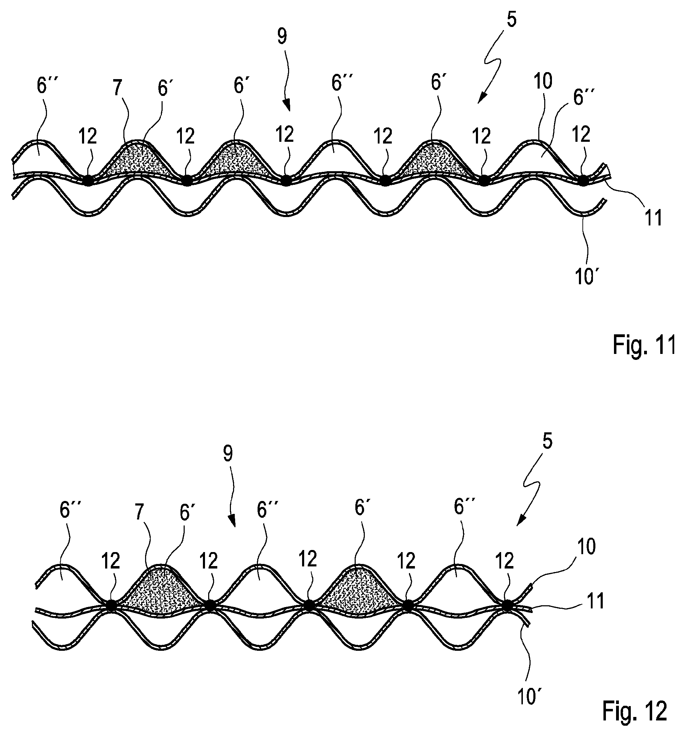

Fig. 11 zeigt für eine bi-konkave Wellenpaarung eine vorteilhafte Möglichkeit zur Anordnung benachbarter Wellenpaare bzw. Wellenblechpaare. Erkennbar wird ein benachbartes weiteres erstes Blech 10' gleichphasig zu den Blechen 10, 11 der vollständig dargestellten Wellenpaarung positioniert, so dass die dem zweiten Blech 11 der Wellenpaarung zugewandten Wellenberge des weiteren ersten Blechs 10' im Bereich der Wellenberge des zweiten Blechs 11 der Wellenpaarung anliegen. Durch die gleichphasige Anordnung innerhalb der Wellenpaarung liegen die Kontaktlinien des benachbarten Blechs 10' zwischen den Kontaktlinien innerhalb der Wellenpaarung.

Bei der in Fig. 12 gezeigten Konfiguration liegt das weitere Blech 10' mit seinen Wellenbergen ebenfalls im Bereich der Wellenberge des zugewandten zweiten Blechs 11 der Wellenpaarung an. Durch die Phasenverschiebung innerhalb der Wellenpaarung fallen dabei die Kontaktlinien zwischen dem weiteren Blech 10' und dem zweiten Blech 11 der Wellenpaarung mit den Kontaktlinien innerhalb der Wellenpaarung zusammen. Die hier vorgeschlagene Anordnung baut besonders kompakt.

## Patentansprüche

1. Latentwärmespeicher für eine Abgasanlage (1) einer Brennkraftmaschine, insbesondere eines Kraftfahrzeugs,
- mit einem Speicherkörper (5), der mehrere parallel zueinander verlaufenden Kanäle (6) aufweist, von denen zumindest einige ein Phasenwechselmaterial (7) enthalten,
- wobei der Speicherkörper (5) durch eine Schichtstruktur (9) mit mindestens zwei Blechen (10, 11) gebildet ist, von denen zumindest eines gewellt ist und die aneinander anliegen, derart, dass die Wellen des wenigstens einen Blechs (10) die Kanäle (6) bilden,
- wobei die beiden Bleche (10, 11) entlang von Kontaktlinien aneinander anliegen,
**dadurch gekennzeichnet,**
- **dass** die beiden Bleche (10, 11) entlang solcher Kontaktlinien aneinander befestigt sind,
- **dass** die beiden Bleche (10, 11) entlang einiger Kontaktlinien lose aneinander anliegen.

2. Latentwärmespeicher nach Anspruch 1,
**dadurch gekennzeichnet,**
**dass** die zwei Bleche (10, 11) spiralförmig gewickelt sind.

3. Latentwärmespeicher nach Anspruch 1,
**dadurch gekennzeichnet,**
**dass** die zwei Bleche (10, 11) paarweise in ebenen Lagen aufeinander geschichtet sind.

4. Latentwärmespeicher nach einem der Ansprüche 1 bis 3,
**dadurch gekennzeichnet,**
**dass** zwischen benachbarten Kontaktlinien mit Phasenwechselmaterial (7) befüllte Kanäle (6') und nicht mit Phasenwechselmaterial (7) befüllte Kanäle (6") vorhanden sind, wobei die beiden Bleche (10, 11) nur entlang von Kontaktlinien aneinander befestigt sind, die beiderseits von befüllten Kanälen (6') angeordnet sind.

5. Latentwärmespeicher nach einem der Ansprüche 1 bis 4,
**dadurch gekennzeichnet,**
**dass** mit Phasenwechselmaterial (7) befüllte Kanäle (6') endseitig verschlossen sind.

6. Latentwärmespeicher nach einem der Ansprüche 1 bis 5,
**dadurch gekennzeichnet,**
**dass** das andere Blech (11) glatt oder ungewellt ist.

7. Latentwärmespeicher nach einem der Ansprüche 1 bis 6,
**dadurch gekennzeichnet,**
**dass** das andere Blech (11) auch gewellt ist oder Wellen aufweist.

8. Latentwärmespeicher nach Anspruch 7,
**dadurch gekennzeichnet,**
**dass** die Wellenstrukturen der beiden Bleche (10, 11) gleiche Wellenlängen aufweisen.

9. Latentwärmespeicher nach Anspruch 7 oder 8,
**dadurch gekennzeichnet,**
**dass** die Wellenstrukturen der beiden Bleche (10, 11) unterschiedliche Amplituden aufweisen.

10. Latentwärmespeicher nach einem der Ansprüche 7 bis 9,
**dadurch gekennzeichnet,**
**dass** die Bleche (10, 11) hinsichtlich ihrer Wellenstrukturen gleichphasig aneinander anliegen.

11. Latentwärmespeicher nach einem der Ansprüche 7 bis 9,
**dadurch gekennzeichnet,**
**dass** die Bleche (10, 11) hinsichtlich ihrer Wellenstrukturen phasenverschoben, insbesondere um eine halbe Wellenlänge, aneinander anliegen.

## Claims

1. A latent heat storage device for an exhaust system (1) of a combustion engine, more preferably of a motor vehicle,
- with a storage body (5) having a plurality of channels (6) running parallel to one another, of which at least some contain a phase-changing material (7),
- wherein the storage body (5) is formed through a layer structure (9) with at least two plates (10, 11), of which at least one is corrugated and which contact each other and are fastened to each other in such a manner that the waves of the at least one plate (10) form the channels (6),
- the two plates (10, 11) contact each other along contact lines,
**characterized in**
- **that** the two plates (10, 11) are fastened to each other along such contact lines,
- **that** the two plates (10,11) loosely contact each other along some contact lines.

2. The latent heat storage device according to Claim 1,
**characterized in**
**that** the two plates (10, 11) are wound spirally.

3. The latent heat storage device according to Claim 1,
**characterized in**
**that** the two plates (10, 11) are stacked on top of each other in pairs in level layers.

4. The latent heat storage device according to one of Claims 1 to 3,
**characterized in**
**that** between adjacent contact lines channels (6') filled with phase-changing material (7) and channels (6") not filled with phase-changing material (7) are present wherein the two plates (10, 11) are fastened to each other only along contact lines which are arranged on both sides of filled channels (6').

5. The latent heat storage device according to one of Claims 1 to 4,
**characterized in**
**that** channels (6') filled with phase-changing material (7) are sealed at the ends.

6. The latent heat storage device according to one of Claims 1 to 5,
**characterized in**
**that** the other plate (11) is smooth or un-corrugated.

7. The latent heat storage device according to one of Claims 1 to 6,
**characterized in**
**that** the other plate (11) is also corrugated or has corrugations.

8. The latent heat storage device according to Claim 7,
**characterized in**
**that** the wave structures of the two plates (10, 11) have same wave lengths.

9. The latent heat storage device according to Claim 7 or 8,
**characterized in**
**that** the wave structures of the two plates (10, 11) have different amplitudes.

10. The latent heat storage device according to one of Claims 7 to 9,
**characterized in**
**that** the plates (10, 11) with respect to their wave structures contact each other in an in-phase manner.

11. The latent heat storage device according to one of the Claims 7 to 9,
**characterized in**
**that** the plates (10, 11) with respect to their wave structures contact each other in a phase-shifted manner, more preferably by half a wave length.

## Revendications

1. Régulateur thermique à changement d'état pour un système d'échappement (1) d'un moteur à combustion interne, en particulier d'un véhicule automobile,
- comprenant un corps accumulateur (5), qui présente plusieurs canaux (6) s'étendant de manière parallèle les uns aux autres, dont au moins quelques-uns contiennent un matériau à changement de phase (7),
- le corps accumulateur (5) étant formé par une structure à couches (9) pourvue au moins de deux tôles (10, 11), dont au moins une est ondulée et qui reposent les unes sur les autres de telle manière que les ondulations de la tôle (10) au moins au nombre d'une forment les canaux (6),
- les deux tôles (10, 11) reposant l'une contre l'autre le long de lignes de contact,
**caractérisé en ce**
- **que** les deux tôles (10, 11) sont fixées l'une contre l'autre le long de lignes de contact de ce type,
- en ce que les deux tôles (10, 11) reposent l'une contre l'autre de manière libre le long de quelques lignes de contact.

2. Régulateur thermique à changement d'état selon la revendication 1,
**caractérisé en ce**
**que** les deux tôles (10, 11) sont enroulées de manière à présenter une forme de spirale.

3. Régulateur thermique à changement d'état selon la revendication 1,
**caractérisé en ce**
**que** les deux tôles (10, 11) sont disposées en couches empilées par paire en des strates planes.

4. Régulateur thermique à changement d'état selon l'une quelconque des revendications 1 à 3,
**caractérisé en ce**
**que** sont présents, entre des lignes de contact adjacentes, des canaux (6') remplis d'un matériau à changement de phase (7) et de canaux (6") non remplis d'un matériau à changement de phase (7), les deux tôles (10, 11) étant fixées l'une contre l'autre seulement le long de lignes de contact, qui sont disposées de part et d'autre de canaux (6') remplis.

5. Régulateur thermique à changement d'état selon l'une quelconque des revendications 1 à 4,
**caractérisé en ce**
**que** des canaux (6') remplis d'un matériau à changement de phase (7) sont fermés côté extrémité.

6. Régulateur thermique à changement d'état selon l'une quelconque des revendications 1 à 5,
**caractérisé en ce**
**que** l'autre tôle (11) est lisse ou n'est pas ondulée.

7. Régulateur thermique à changement d'état selon l'une quelconque des revendications 1 à 6,
**caractérisé en ce**
**que** l'autre tôle (11) est également ondulée ou présente des ondulations.

8. Régulateur thermique à changement d'état selon la revendication 7,
**caractérisé en ce**
**que** les structures ondulées des deux tôles (10, 11) présentent des longueurs d'ondulation identiques.

9. Régulateur thermique à changement d'état selon la revendication 7 ou 8,
**caractérisé en ce**
**que** les structures ondulées des deux tôles (10, 11) présentent des amplitudes différentes.

10. Régulateur thermique à changement d'état selon l'une quelconque des revendications 7 à 9,
**caractérisé en ce**
**que** les tôles (10, 11) reposent les unes contre les autres en phase.

11. Régulateur thermique à changement d'état selon l'une quelconque des revendications 7 à 9,
**caractérisé en ce**
**que** les tôles (10, 11) reposent les unes contre les autres avec un décalage de phase eu égard à leurs structures ondulées, en particulier d'une demi-longueur d'onde.
